# EUROPEAN PATENT SPECIFICATION

(11) **EP 3 523 386 B1**
(45) Date of publication and mention of the grant of the patent: **12.06.2024**
(21) Application number: 17859074.1
(22) Date of filing: 04.10.2017
(51) Int. Cl.: C09D 167/06, C09D 175/14, E04F 15/00, C08F 290/06, C08G 18/42, C08G 18/67, C08G 18/79, E04F 15/02

(54) **FLOOR COATINGS COMPRISING A RESIN, A CURE SYSTEM AND DIAMOND PARTICLES AND METHODS OF MAKING THE SAME**
BODENBELÄGE MIT EINEM HARZ, HÄRTUNGSSYSTEM UND DIAMANTPARTIKEL SOWIE VERFAHREN ZUR HERSTELLUNG DAVON
REVÊTEMENTS DE SOL COMPRENANT UNE RÉSINE, UN SYSTÈME DE DURCISSEMENT ET DES PARTICULES DE DIAMANT ET LEURS PROCÉDÉS DE FABRICATION

(30) Priority: 05.10.2016 US 201662404479 P
(43) Date of publication of application: 14.08.2019
(73) Proprietor: AHF, LLC d/b/a AHF Products, Mountville, PA 17554 (US)
(72) Inventor: SIGEL, Gary A., Columbia PA 17512 (US); TIAN, Dong, Lancaster PA 17601 (US); BAKER, Daniel P., Downingtown PA 19335 (US)
(74) Representative: Rummler, Felix
(86) International application number: PCT/US2017/055044
(87) International publication number: WO 2018/067640

(56) References cited:
- WO-A1-2010/099009
- WO-A1-2014/113653
- WO-A1-2016/160666
- WO-A1-2016/160670
- WO-A1-2017/087436
- CN-A- 103 666 239
- US-A1- 2001 051 229
- US-A1- 2002 156 143
- US-A1- 2015 240 108
- US-A1- 2016 096 967
- US-B1- 6 204 303
- US-B1- 6 440 500

## Description

### FIELD OF INVENTION

The present disclosure is directed to a coating for a substrate comprising a curable resin, a cure system and diamond particles that provides improved wear resistance and ability to maintain cleanliness. The curable resin contains at least one polyester urethane acrylate and monomers. The cure system contains a photo-initiator, a thermal initiator, or a combination of both. Methods of making coatings containing a curable resin, a cure system, and diamond particles are also disclosed herein, as well as methods of making a coated substrate, wherein the substrate may be a flooring material.

### BACKGROUND

Coatings containing abrasion resistant particles have been used to cover surfaces of flooring materials and other surfaces to protect such products or surfaces from damage by abrasion or scratch and from tarnish by stain and dirt. Conventional abrasion resistant coatings incorporate aluminum oxide, silicon carbide or silica (see, e.g., WO 2011/037872 and U.S. Patent No. 6,803,408). Often, the formulations require large amounts of the abrasion resistant particles and yet still provide inadequate protection of the surface from scratch and tarnish.

Other attempts to improve coatings have involved incorporating a harder resin with increased crosslinking. The resulting coatings have improved scratch resistance due to high glass transition temperature (Tg) and crosslinking, but are less flexible and prone to cracking.

There exists a need for better, high-performance coatings to increase scratch resistance and improve wearability and cleanliness of flooring.

WO 2016/160666 A1, published after the priority date of the present invention, describes an abrasion resistant flooring covering formed from a UV curable coating composition having binder and diamond particles - the abrasion resistant flooring covering used to overcoat the surface of flooring products or various abrasion heavy surfaces from damage by abrasion or scratch.

US 2016/0096967 A1 describes optically transparent films, which can comprise a coating of nanodiamonds to introduce desirable properties, such as hardness, good thermal conductivity and in increased dielectric constant. In general, transparent conductive films can be formed with desirable property enhancing nanoparticles included in a transparent conductive layer and/or in a coating layer. Property enhancing nanoparticles can be formed from materials having a large hardness parameter, a large thermal conductivity and/or a large dielectric constant. Suitable polymers are incorporated as a binder in the layers with the property enhancing nanoparticles. The coatings with property enhancing nanoparticles can be solution coated and corresponding solutions are described.

US 2002/156143 A1 describes a composition and method for controlling the gloss of surface covering products through curing of the composition to create a wear layer surface, and preferably on a floor covering product. The surface covering product is prepared by application of an aromatic polyester acrylate composition including a flatting agent and/or hard particles, and a free-radical generating compound to a substrate, and then the coating is partially cured by exposure to low peak irradiance UV light in either ambient or inert air, followed by fully curing the coating with high peak irradiance UV light in an inert atmosphere to form a low gloss abrasion resistant wear layer surface.

### SUMMARY

The present invention is defined in the independent claims 1 and 12. Preferred features are recited in the dependent claims.

A curable coating for a substrate is disclosed herein containing: (a) curable resin comprising a polyester urethane acrylate and an acrylate functional monomer; (b) a cure system; and (c) diamond particles, wherein the coating contains a mixture of nano-sized and micron-sized diamond particles. The curable resin may include a polyester urethane acrylate and an acrylate functional monomer. The cure system may be selected from a group consisting of photo-initiators, thermal initiators, curing resins, and combinations thereof. In an embodiment, the coating contains 0.5% to less than 5.5% by weight of diamond particles. In an embodiment, the coating has a Tg of 15°C to 50°C and double bond equivalent weight of 0.0025 to 0.0060. The coating optionally further includes an additional abrasion resistant particle, a matting agent, and/or hydrophobic particles.

An unclaimed example is a flooring product comprising: a substrate; and a scratch resistant layer made from a curable coating containing: (a) curable resin; (b) a cure system; and (c) diamond particles, wherein the curable resin includes a polyester urethane acrylate and an acrylate functional monomer.

Yet another example is a method of making a curable coating for a substrate comprising the steps of: making a curable resin; adding diamond particles to the curable resin; and adding a cure system to the mixture of curable resin and diamond particles, wherein the curable coating has a glass transition temperature of 15°C to 50°C, and a double bond equivalent weight of 0.0025 to 0.0060. The curable resin may be made by: (i) forming a hydroxy terminated polyester acrylate by the steps of reacting an aromatic acid, tere-phthalic acid or aliphatic di-acid with an alkyl polyol to produce a hydroxy terminated polyester, and functionalizing the hydroxy terminated polyester by reaction with a (meth)acrylic acid containing compound; (ii) forming a functionalized urethane acrylate containing reactive NCO sites by reacting an isocyanate with a hydroxy terminated multifunctional acrylate; and (iii) forming the polyester urethane acrylate by reacting the hydroxy terminated polyester acrylate with the functionalized urethane acrylate containing reactive NCO sites.

A further example is a method of making a coated substrate comprising: applying a first layer of the curable coating containing: (a) curable resin; (b) a cure system; and (c) diamond particles, wherein the curable resin includes a polyester urethane acrylate and an acrylate functional monomer; and curing the first layer to make the coated substrate, optionally using UV light. In another example, a method of making a multilayer coated substrate is disclosed. That method includes: making the curable coating containing: (a) curable resin; (b) a cure system; and (c) diamond particles, wherein the curable resin includes a polyester urethane acrylate and an acrylate functional monomer; applying a first layer of the curable coating to the substrate; curing the first layer; applying an additional layer of the curable coating to the coated substrate; and curing the additional layer to make the multilayer coated substrate.

### DETAILED DESCRIPTION

The present disclosure relates to a coating containing diamond particles that provides superior wear resistance and cleanability to a substrate, and can be used on flooring in both commercial and residential environments. The diamond particles are abrasion resistant and help impart wear and scratch resistance to the overall coating. The coating disclosed herein provides a scratch resistant layer (i.e., a wear layer) that looks better longer, allowing for less maintenance and upkeep, thereby reducing maintenance cost while providing a longer-lasting aesthetic wear layer.

### Curable coating

A first embodiment of the disclosure is a curable coating for a substrate comprising: i) a curable resin containing a polyester urethane acrylate and an acrylate functional monomer; ii) a cure system; and iii) diamond particles.

The curable coating herein is capable of curing by irradiating with an ultraviolet (UV) light, optionally in combination with other light or radiation sources and/or other curing systems, such as moisture curing.

In an embodiment, the curable coating has a glass transition temperature (Tg) of 15°C to 50°C, preferably 35°C to 50°C, and more preferably 38°C to 48°C, and double bond equivalent weight (C=C eq/gram formulation) of 0.0025 to 0.0060, preferably 0.0030 to 0.0050, and more preferably 0.0035 to 0.0045.

The curable resin of the present disclosure comprises a polyester urethane acrylate and a monomer, preferably an acrylate functional monomer, such as those disclosed in U.S. Patent No. 5,719,227. In an embodiment, the polyester urethane acrylate oligomer (also referred to as a polyester urethane acrylate oligomer) may be combined with one or more acrylate functional monomers to form a resin, which is then mixed with diamond particles, and optionally hydrophobic particles, a matting agent, and/or a photo-initiator to form a coating having superior mar and scratch properties. "Mar" and "scratch" refer to physical deformations resulting from mechanical or chemical abrasion. "Mar resistance" is a measure of a material's ability to resist appearance degradation caused by small scale mechanical stress. "Scratch resistance" is the ability of a material to resist more severe damage that can lead to visible, deeper or wider trenches. It will be appreciated, that the resin can be used in conjunction with other additives that impart improved mar and/or scratch resistance to coatings.

In an embodiment, the polyester urethane acrylate is prepared by reacting a hydroxy (OH) terminated polyester acrylate with a functionalized urethane acrylate.

More specifically, the polyester urethane acrylate may be prepared by:
i) forming a hydroxy terminated polyester acrylate by:
   a. reacting an aromatic acid, tere-phthalic acid or aliphatic di-acid with an alkyl polyol to make a hydroxy terminated polyester; and
   b. functionalizing the hydroxy terminated polyester by reacting the hydroxy terminated polyester with a (meth)acrylic acid containing compound;
ii) forming a functionalized urethane acrylate containing reactive NCO sites by reacting an isocyanate with a hydroxy terminated multifunctional acrylate; and
iii) reacting the hydroxy terminated polyester acrylate with the functionalized urethane acrylate containing reactive NCO sites to make the polyester urethane acrylate.

In an embodiment, in the final step, the polyester acrylate that has available OH sites is reacted with the functionalized urethane acrylate having NCO sites to form a new urethane linkage, thereby making the polyester urethane acrylate. In an embodiment, the polyester urethane acrylate has a double bond equivalent weight (C=C eq/gram formulation) of 0.0010 to 0.0025, and preferably 0.0013 to 0.0015.

The polyester acrylate may be a linear or branched polymer having at least one acrylate or (meth)acrylate functional group. In some embodiments, the polyester acrylate has at least 1 to 10 free acrylate groups, (meth)acrylate groups, or a combination thereof.

As used herein, (meth)acrylate groups includes methacrylate and acrylate groups. Likewise, (meth)acrylic acid includes acrylic acid and methacrylic acid.

The polyester urethane backbone of the polyester urethane acrylate of the present disclosure may be formed from the reaction of a polyester polyol with an isocyanate-containing compound. This polyester urethane backbone is further reacted with an acrylate-containing compound to add acrylate functionality onto the backbone, usually as one or more end-groups, but they can also be pendent. In an embodiment, higher functionality polyisocyanates such as isocyanurate, biuret and allophanate, may be used. Reacting isocyanurate trimers such as Bayer's Desmodur N3300 or biurets such as Bayer's Desmodur N 100 or N3200 with a long chain hydroxyalkyl(meth)acrylate and a polyester polyol can produce one-component radiation-curable oligomers which have a long shelf-life. The oligomers produce radiation-curable coatings of superior stain, gloss retention, abrasion and gouge resistance.

In non-limiting embodiments, the polyester polyol may be the reaction product of a hydroxyl-functional compound and a carboxylic acid functional compound. The hydroxyl-functional compound is present in a stoichiometric excess to the carboxylic-acid compound. In some embodiments the hydroxyl-functional compound is a polyol, such a diol or a tri-functional or higher polyol (e.g. triol, tetrol, etc.). In some embodiments the polyol may be aromatic, cycloaliphatic, aliphatic, or a combination thereof. In some embodiments the carboxylic acid-functional compound is dicarboxylic acid, a polycarboxylic acid, or a combination thereof. In some embodiments, the dicarboxylic acid and polycarboxylic acid may be aliphatic, cycloaliphatic, aromatic, or a combination thereof.

The high molecular weight polyol may be reacted with polyisocyanate, such as a diisocyanate, a tri-functional isocyanate (e.g. isocyanurate), higher functional polyisocyanates, or a combination thereof in an NCO:OH ratio ranging from 2: 1 to 4: 1. The polyisocyanate may be selected from isophorone diisocyanate, 4,4'-dicyclohexylmethane-diisocyanate, and trimethyl-hexamethylene-diisocyanate, 1,6 hexamethylene diisocyanate, 2,2,4-trimethylhexamethylene diisocyanate, octadecylene diisocyanate and 1,4 cyclohexylene diisocyanate. toluene diisocyanate; methylenediphenyl diisocyanate; tetra methylxylene diisocyanate, and isocyanurates, biurets, allophanates thereof, as well as mixtures thereof. The resulting reaction product is an isocyanate -terminated prepolymer. In a preferred embodiment, the isocyanate is HDI trimer N-3300.

Isocyanate as used herein includes polyisocyanates. Isocyanate is the functional group with the formula R-N=C=0. An isocyanate that has two isocyanate groups is known as a di-isocyanate. Di-isocyanates are manufactured for reactions with polyols in the production of polyurethanes.

An alkyl polyol is a polyol with an alkyl linkage. Any alkyl polyol is suitable for use with the disclosure. In one embodiment, the alkyl group has two to twelve carbons, preferably, two to six carbons, and may be branched, straight or cyclic.

The isocyanate-terminated prepolymer is then reacted with hydroxyl-functional acrylate compound in an NCO:OH ratio of 1 : 1 to yield an acrylate or (meth)acrylate functional polyurethane. The hydroxyl-functional acrylate compounds may include hydroxyethyl acrylate, hydroxyethyl methacrylate, hydroxypropyl acrylate, hydroxypropyl methacrylate, hydroxybutyl acrylate, hydroxybutyl methacrylate, hydroxypentyl acrylate, hydroxypentyl methacrylate, hydroxyhexyl acrylate, hydroxyhexyl methacrylate, aminoethyl acrylate, and aminoethyl methacrylate, and a combination thereof.

Other examples of useful acrylates for adding acrylate functionality onto the polyester urethane backbone include acrylate-functional oligomers that include mono-functional oligomers, di-functional oligomers, tri-functional oligomers, tetra-functional oligomers, penta-functional oligomers, and combinations thereof.

In some non-limiting embodiments, the mono-functional oligomers may be selected from alkoxylated tetrahydrofurfuryl acrylate; alkoxylated tetrahydrofurfuryl methylacrylate; alkoxylated tetrahydrofurfuryl ethylacrylate; alkoxylated phenol acrylate; alkoxylated phenol methylacrylate; alkoxylated phenol ethylacrylate; alkoxylated nonylphenol acrylate; alkoxylated nonylphenol methylacrylate; alkoxylated nonylphenol ethylacrylate, and mixtures thereof. The alkoxylation may be performed using ethylene oxide, propylene oxide, butylene oxide, or mixtures thereof. In some embodiments the degree of alkoxylation ranges from 2 to 10. In some embodiments, the degree of alkoxylation ranges from 4 to 6.

In some non-limiting embodiments, the di-functional oligomers may be selected from ethylene glycol diacrylate, propylene glycol diacrylate, diethylene glycol diacrylate, dipropylene glycol diacrylate, triethylene glycol diacrylate, tripropylene glycol diacrylate, polyethylene glycol diacrylate, polypropylene glycol diacrylate, ethoxylated bisphenol A diacrylate, bisphenol A diglycidyl ether diacrylate, resorcinol diglycidyl ether diacrylate, 1,3-propanediol diacrylate, 1,4-butanediol diacrylate, 1,5-pentanediol diacrylate, 1,6-hexanediol diacrylate, neopentyl glycol diacrylate, cyclohexane dimethanol diacrylate, ethoxylated neopentyl glycol diacrylate, propoxylated neopentyl glycol diacrylate, ethoxylated cyclohexanedimethanol diacrylate, propoxylated cyclohexanedimethanol diacrylate, and mixtures thereof.

In an embodiment, oligomers may be prepared by reacting 0.7 to 1.5 equivalents of Desmodur N-3300 with 1.0 equivalent of a mixture of hydroxyalkyl(meth)acrylate and phthalate polyester polyols (equivalent ratio of hydroxyalkyl(meth)acrylate to polyester polyol greater than 0.10) to produce a highly branched, multifunctional (meth)acrylate polyurethane product. The product may be mixed with acrylate reactive diluents and photoinitiators to form a coating composition. Especially valuable properties are obtained when substantial quantities of high molecular weight, ethoxylated and propoxylated tri(meth)acrylates are the principle reactive diluents.

In another embodiment, the isocyanurates, biurets and allophanates may be aliphatic, cycloaliphatic or aromatic such as those prepared from 1,6 hexamethylene diisocyanate (Desmodur H); methylene -bis(4-cyclohexylisocyanate); l-isocyanato-3-isocyanatomethyl-3,5,5-trimethylcyclohexane; 2,2,4-trimethylhexamethylene diisocyanate; 2,4,4-trimethylhexamethylene diisocyanate; toluene diisocyanate; methylenediphenyl diisocyanate; and tetra methylxylene diisocyanate. The preferred polyisocyanates are the trimer isocyanates represented by R in Formula 1 (isocyanurate, biuret and allophanate). The most preferred trimers are those derived from 1,6-hexamethylene diisocyanate which is commercially available as Desmodur N from Bayer Corporation.

In a preferred embodiment, the hydroxy terminated multifunctional acrylate is dipentaerythritol monohydroxy-pentaacrylate SR399.

Hydroxy terminated polyester has free hydroxyl groups at the terminal ends of the polyester chain or along the backbone of the polyester chain.

The hydroxyalkyl(meth)acrylate may be polycaprolactone based hydroxy(meth)acrylates according to the skeletal structures in Formula 2: 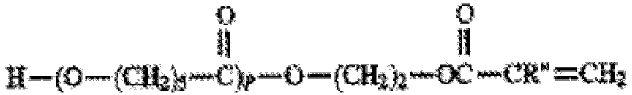 where R"=H or CH3, and p=2 or 3.

The polycaprolactone based hydroxy(meth)acrylates are supplied commercially by Union Carbide as Tone M-100 (number average molecular weight of 344) and by San Esters Corporation as Placcel FA and FM series (number average molecular weights from 230 to 472).

The preferred oligomer is prepared from Desmodur N-3300, Tone M-100 and a predominantly 1,6-hexylene phthalate polyester polyol. A predominantly 1,6-hexylene phthalate polyester polyol is defined as a phthalate polyester polyol wherein at least 50 equivalent percent of the <150 equivalent weight (eq. wt. ) polyol is 1,6-hexanediol and wherein at least 50 equivalent percent of the polycarboxylic acid is phthalic acid or phthalic anhydride.

Suitable (meth)acrylate reactive diluents include (meth)acrylic acid, isodecyl (meth)acrylate, N-vinyl formamide, isobornyl (meth)acrylate, tetraethylene glycol (meth)acrylate, tripropylene glycol (meth)acrylate, hexanediol di(meth)acrylate, ethoxylate bisphenol-A di(meth)acrylate, ethoxylated neopentyl glycol di(meth)acrylate, propoxylated neopentyl glycol di(meth)acrylate, ethoxylated tripropylene glycol di(meth)acrylate, glyceryl propoxylated tri(meth)acrylate, tris (2-hydroxy ethyl) isocyanurate tri(meth)acrylate, pentaerythritol tri(meth)acrylate, pentaerythritol tetra(meth)acrylate, dimethylol propane tri(meth)acrylate dipentaerythritol monohydroxypenta(meth)acrylate, and trimethylol propane tri(meth)acrylate and its ethoxylated and propoxylated analogues of the skeletal structures in Formula 3: 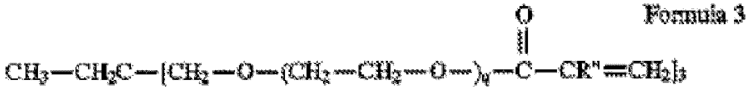 or 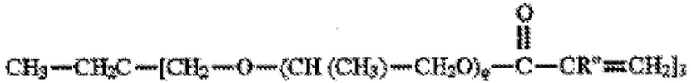 where R"=H, or CH3, and q=0, 1, 2, . . . , 9 or 10.

In an embodiment, (meth)acrylate reactive diluents are the multifunctional acrylates with number average molecular weights of 226 to 2000. Examples of such are tetraethylene glycol diacrylate with a molecular weight of 302, ethoxylated bisphenol-A diacrylate with a number average molecular weight of 776 (SR602 from Sartomer Company), trihydroxyethyl isocyanurate triacrylate with number average molecular weight of 423 (SR368 from Sartomer), trimethylol propane triacrylate with a number average molecular weight of 296 (SR351 from Sartomer), and ethoxylated trimethylol propane triacrylates with number average molecular weights from 400 to 2000 (SR454, SR499, SR502, SR9035, and SR 415 from Sartomer Company and Photomer 4155 and Photomer 4158 from Henkel Corporation).

Any aromatic acid known in the art may be used in accordance with the disclosure, for example, but not limited to phallic anhydride.

Any aliphatic di-acid known in the art may be used in accordance with the disclosure, for example, but not limited to adipic acid.

In some embodiments the diol may be selected from alkylene glycols, such as ethylene glycol, propylene glycol, diethylene glycol, dipropylene glycol, triethylene glycol, tripropylene glycol, hexylene glycol, polyethylene glycol, polypropylene glycol and neopentyl glycol; hydrogenated bisphenol A; cyclohexanediol; propanediols including 1,2-propanediol, 1 ,3-propanediol, butyl ethyl propanediol, 2-methyl-1 ,3-propanediol, and 2-ethyl-2-butyl-l ,3-propanediol; butanediols including 1 ,4-butanediol, 1 ,3-butanediol, and 2-ethyl- 1,4-butanediol; pentanediols including trimethyl pentanediol and 2-methylpentanediol; cyclohexanedimethanol; hexanediols including 1 ,6-hexanediol; caprolactonediol (for example, the reaction product of epsilon-caprolactone and ethylene glycol); hydroxyalkylated bisphenols; polyether glycols, for example, poly(oxytetramethylene) glycol. In some embodiments, the tri-functional or higher polyol may be selected from trimethylol propane, pentaerythritol, di-pentaerythritol, trimethylol ethane, trimethylol butane, dimethylol cyclohexane, glycerol and the like. In certain embodiment, the diol is selected from the group consisting of hexane diol, ethylene glycol and butanediol.

Any triol known in the art may be used in accordance with the disclosure, for example, but not limited to glycerine.

In an embodiment, the acrylate-functional monomer may be selected from acrylic acid, methacrylic acid, ethyl acrylic acid, 2-phenoxyethyl acrylate; 2-phenoxyethyl methylacrylate; 2-phenoxyethyl ethylacrylate; tridecryl acrylate; tridecryl methylacrylate; tridecryl ethylacrylate; and mixtures thereof. In another embodiment, the acrylate functional monomer is selected from alkyl acrylates having up to 12 carbon atoms in the alkyl segment such as ethyl acrylate, butyl acrylate, 2-ethylhexyl acrylate, amyl acrylate, n-lauryl acrylate, nonyl acrylate, n-octyl acrylate, isooctyl acrylate, isodecyl acrylate, etc.; alkoxyalkyl acrylates such as methoxybutyl acrylate, ethoxyethyl acrylate, ethoxypropyl acrylate, etc. ; hydroxyalkyl acrylates such as hydroxyethyl acrylate, hydroxybutyl acrylate, etc.; alkenyl acrylates such as tnmethoxyallyloxymethyl acrylate, allyl acrylate, etc.; aralkyl acrylates such as phenoxyethyl acrylate, benzyl acrylate, etc.; cycloalkyl acrylates such as cyclohexyl acrylate, cyclopentyl acrylate, isobornyl acrylate, etc.; aminoalkyl acrylates such as diethylaminoethyl acrylate; cyanoalkyl acrylates such as cyanoethyl acrylate, cyanopropyl acrylate, etc. ; carbamoyloxy alkyl acrylates such as 2-carbamoyloxyethyl acrylate, 2-carbamoyl-oxypropyl acrylate, N-methylcarbamoyloxyethyl acrylate, N-ethylcarbamoyloxymethyl acrylate, 2-(N-methylcarbamoyloxy)-ethyl acrylate, 2-(N-ethylcarbamoyloxy)ethyl acrylate, etc.; and the corresponding methacrylates. In some embodiments, the alkyl acrylates having up to 12 carbon atoms in the alkyl segment may be used as a reactive solvent / diluent in the abrasions resistant coating layer.

In some non-limiting embodiments, the acrylate-functional monomer may be selected from acrylic acid, methacrylic acid, ethyl acrylic acid, 2-phenoxyethyl acrylate; 2-phenoxyethyl methylacrylate; 2-phenoxyethyl ethylacrylate; tridecryl acrylate; tridecryl methylacrylate; tridecryl ethylacrylate; and mixtures thereof.

In some embodiments, the acrylate-functional monomer is a silicone acrylate. Curable silicone acrylates are known and suitable silicone acrylates are disclosed, for example in U.S. Pat. 4,528,081 and U.S. Pat. 4,348,454. Suitable silicone acrylates include silicone acrylates having mono-, di-, and tri-acrylate moieties. Suitable silicone acrylates include, for example, Silcolease^{®} UV RCA 170 and UV Poly 110, available from Blue Star Co. Ltd, China; and Silmer ACR D2, Silmer ACR Di-10, Silmer ACR Di-50 and Silmer ACR Di-100, available from Siltech.

In preparing the polyester urethane acrylate oligomer of the present disclosure, a catalyst such as dibutyltin dilaurate may or may not be included to aid the urethane formation between the polyisocyanate and the hydroxy-containing components. However, it is advantageous to prepare the polyester urethane acrylate oligomer in a clean vessel free of moisture or water. The vessel is equipped with dry-air blanket and a heating jacket, and has continuous mixing. It is further advantageous to prepare the polyester urethane acrylate oligomer in the presence of substantial amounts of the reactive acrylate diluents to help control heat of reactions which may otherwise cause undesired side reactions. The reaction temperature is maintained at 75°C to 85°C. Higher temperatures can initiate undesired free radical polymerization. On the other hand, lower temperatures will retard or slow down the NCO/OH reaction.

### Diamond Particles

The coating disclosed herein includes diamond particles, which are abrasion resistant and impart wear and scratch resistance to the overall coating. The improved wear and scratch resistance extends the life span of the floor covering. The Mohs hardness of diamond (10) prevents scratching commonly found when using particles having Mohs hardness less than diamond, e.g., boron nitride (9.5), silicon carbide (9.5), corundum (9), and silica (7).

The diamond particles used in accordance with the present disclosure are preferably made from synthetic diamonds, though natural diamonds may also be used. To make the diamond particles, diamonds are ground to a desired size, preferably, having a narrow particle size distribution. The term "narrow particle size distribution" as used herein means a standard deviation that is no more than 35%, preferably less than 35%, more preferably less than 25%, and still more preferably less than 15% deviation based on the average particle size for any given diamond particle in a blend or mixture.

According to the invention, the coating contains a mixture of nano-sized diamond particles and micron-sized diamond particles. Nano-sized diamond particles may have an average particle size of 1 nanometers (nm) to 900 nm, preferably 2 nm to 600 nm, and more preferably 10 nm to 500 nm. The micron-sized diamond particles may have an average particle size of 0.2 µm to 200 µm, preferably 0.5 µm to 100 µm, more preferably 1 µm to 50 µm, and still more preferably 1 µm to 20 µm. The mixture of sizes results in improved scratch resistance because the nano-sized diamond particles intercalate between larger sized micron-sized particles.

The curable coating containing a mixture of nano-sized diamond particles and micron-sized diamond particles has improved scratch and mar resistance.

In an embodiment, diamond particles, some of which are nano-sized, are mixed with the curable resin, and cure system, and applied as a coating, optionally in two or more layers on to a substrate, thereby providing a coated substrate that is capable of preventing fine scratching observed in everyday foot traffic wear.

The curable coating may comprise diamond particles in an amount that ranges from 0.5 wt. % to less than 5.5 wt. %, based on the total weight of the coating, preferably 1 wt. % to 5 wt. %, and more preferably, 2 wt. % to 4.5 wt. %. In an embodiment, the coating comprises 2.5 wt. % to 4 wt.% of diamond particles. It has been discovered that after application on a substrate and curing a coating that incorporates diamond particles in the above recited amounts, the coated substrate exhibits improved, desired scratch resistance and gloss retention properties.

According to some embodiments, a ratio of the average coating matrix thickness to average diamond particle size ranges from 0.6: 1 to 2: 1 , preferably from 0.8: 1 to 2: 1, more preferably from 0.9: 1 to 1.5: 1, and most preferably, 1:1, wherein, in an embodiment thereof, the diamond particles are of micron-size, meaning that the diamond particles have an average particle size of 0.2 µm to 200 µm, preferably 0.5 µη 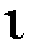 to 100 µm, more preferably 1 µm to 50 µm, and still more preferably 1 µm to 20 µm.

The curable coating contains a mixture of nano-sized diamond particles and micron-sized diamond particles, present in an amount of 1 wt. % to 15 wt. % of the coating. In an embodiment, the curable coating contains nano-sized diamond particles in an amount of 0.5 wt. % to 10 wt. % of the coating. In another embodiment thereof, a ratio of the average coating matrix thickness to average micron-sized diamond particle ranges from 0.8: 1 to 2: 1, more preferably from 0.9: 1 to 1.5: 1 , and most preferably, 1:1.

In some embodiments, the diamond particles have an average distance between two adjacently placed particles from 20 µm to 75 µm, and preferably from 30 µm to 65 µm, which is measured between the centers of the adjacent particles.

Upon mixing the diamond particles with the coating matrix, the diamond particles are believed to be encapsulated into a 100% solids coating matrix.

### Cure System

A cure system in accordance with the present disclosure may be a photo-initiator, a thermal initiator, or any combination thereof that is capable of curing by irradiating with light emitted from an ultraviolet (UV) light source, such as a UV lamp. Any conventionally known UV light from any known conventionally known source may be used in accordance with the invention.

A photo-initiator may be added to the cure system to facilitate UV curing of the curable coating. Any photo-initiator known in the art may be used. In some an embodiment, the photo-initiator may include a benzoin compound, an acetophenone compound, an acylphosphine oxide compound, a titanocene compound, a thioxanthone compound or a peroxide compound, or a photosensitizer such as an amine or a quinone, or any combination thereof. Specific examples of suitable photo-initiatiors include benzophenone, 1-hydroxycyclohexyl phenyl ketone, benzoin, benzoin methyl ether, benzoin ethyl ether, benzoin isopropyl ether, benzyl diphenyl sulfide, tetramethylthiuram monosulfide, azobisisobutyronitrile, dibenzyl, diacetyl and beta-chloroanthraquinone. In an embodiment, the photo-initiator is selected from a group consisting of Benzophenone, 1-hydroxycyclohexyl phenyl ketone, benzoin, benzoin methyl ether, benzoin ethyl ether, benzoin isopropyl ether, and combinations thereof.

A thermal initiator may be added to the cure system to facilitate UV curing of the curable coating. Any thermal initiator known in the art may be used. In one embodiment, the thermal initiator is a free radical initiator that generates radicals upon exposure to heat rather than light. In an embodiment, the thermal initiator is selected from a peroxide compound, an azo compound, and a combination thereof. In some embodiments, suitable peroxide and azo initiators include: diacyl peroxides, such as 2-4-diclorobenzyl peroxide, diisononanoyl peroxide, decanoyl peroxide, lauroyl peroxide, succinic acid peroxide, acetyl peroxide, benzoyl peroxide, and diisobutyryl peroxide; acetyl alkylsulfonyl peroxides, such as acetyl cyclohexylsulfonyl peroxide; dialkyl peroxydicarbonates, such as di(n-propyl)peroxy dicarbonate, di(sec-butyl)peroxy dicarbonate, di(2-ethylhexyl)peroxy dicarbonate, diisopropylperoxy dicarbonate, and dicyclohexylperoxy dicarbonate; peroxy esters, such as alpha-cumylperoxy neodecanoate, alpha-cumylperoxy pivalate, t-amyl neodecanoate, t-amylperoxy neodecanoate, t-butylperoxy neodecanoate, t-amylperoxy pivalate, t-butylperoxy pivalate, 2,5-dimethyl-2,5-di(2-ethylhexanoylperoxy)hexane, t-amylperoxy-2-ethyl hexanoate, t-butylperoxy-2-ethyl hexanoate, and t-butylperoxy isobutyrate; and azobis (alkyl nitrile) peroxy compounds, such as 2,2'-azobis-(2,4-dimethylvaleronitrile), azobisisobutyronitrile, azobisisoheptanonitrile, azobisisopentanonitrile, and 2,2'-azobis-(2-methylbutyronitrile); t-butyl-peroxymaleic acid, 1 , 1 '-azobis-( 1 -cyclohexanecarbonitrile).

In some embodiments, the thermal initiator comprises 2,2'-azobis-(2,4-dimethylvaleronitrile). In another embodiment, the thermal initiator comprises a peroxy ketal, such as 1, 1-di(t-butylperoxy)-3,3,5-trimethylcyclohexane; a peroxy ester, such as o,o'-t-butyl-o-isopropyl monoperoxy carbonate, 2,5-dimethyl-2,5-di(benzoylperoxy) carbonate, o,o'-t-butyl-o-(2-ethylhexyl)-monoperoxy carbonate, t-butylperoxy acetate, t-butylperoxy benzoate, di-t-butyldiperoxy azelate, and di-t-butyldiperoxy phthalate; a dialkylperoxide, such as dicumyl peroxide, 2,5-dimethyl-2,5-di(t-butylperoxy)hexane, t-butyl cumyl peroxide, di-t-butyl peroxide, and 2,5-dimethyl,2,5-di(t-butylperoxy)hexyne-3; a hydroperoxide, such as 2,5-dihydroperoxy-2,5-dimethyl hexane, cumene hydroperoxide, t-butyl hydroperoxide and t-amyl hydroperoxide; a ketone peroxide, such as n-butyl-4,4-bis-(t-butylperoxy)valerate, 1, 1-di(t-butylperoxy)-3,3,5-trimethyl cyclohexane, I, Γ-di-t-amyl-peroxy cyclohexane, 2,2-di(t-butylperoxy) butane, ethyl-3,3-di(t-butylperoxy)butyrate, or a blend of t-butyl peroctoate, and 1 , 1 -di(t-butylperoxy)cyclohexane.

Various catalysts known in the art may also be optionally added to the cure system to improve efficiency and/or other desired properties. Such catalysts include, but are not limited to, a vazo catalyst, a moisture catalyst, or a combination thereof.

The curable coating may comprise 65 wt.% to 95 wt.% of the cure system relative to the total weight of the coating. In another embodiment, the curable coating may comprise 75 wt.% to 95 wt.%, preferably 77 wt.% to 93 wt.%, of the cure system relative to the total weight of the curable coating.

In an embodiment, each fully cured layer of the curable coating has an average coating thickness that ranges from 2 µm to 50 µm, preferably 4 µm to 40 µm, and more preferably 6 µη 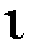 to 20 µm.

The substrate to which a curable coating of the present disclosure is applied may be any surface used in residential or commercial building. Preferably, it may be selected from any flooring material known in the art, and more preferably from linoleum tile, ceramic tile, natural wood planks, engineered wood planks, vinyl tile - such as luxury vinyl tile ("LVT"), laminate, and resilient sheet - such as homogenous or heterogeneous commercial resilient sheets and residential resilient sheets.

### Additives

In certain embodiments of the invention, the curable coating may include an additional abrasion resistant particle having a Mohs value of less than 10. One or more additional abrasion resistant particles may be added, preferably with each exhibiting a Mohs hardness value ranging from 6 to 10 - including all integers therebetween, as measured on the Mohs scale of mineral hardness. In some embodiments, the abrasion resistant particles may be selected from aluminum oxide (Mohs value of 9), topaz (Mohs value of 8), quartz (Mohs value of 7), nepheline syenite or feldspar (Mohs value of 6), ceramic or ceramic microspheres (Mohs value of 6), and combinations thereof. Diamond has a Mohs value of10.

According to some embodiments, the additional abrasion resistant particle may be present relative to the diamond particle in a weight ratio ranging from 1 : 1 to 10: 1. In some non-limiting embodiments, the additional abrasion resistant particle is present relative to the diamond particle in a weight ratio of 1 : 1. In some non-limiting embodiments, the additional abrasion resistant particle is present relative to the diamond particle in a weight ratio of 2: 1. In some non-limiting embodiments, the additional abrasion resistant particle is present relative to the diamond particle in a weight ratio of 4: 1. In some non-limiting embodiments, the additional abrasion resistant particle is present relative to the diamond particle in a weight ratio of 8: 1. It has been found that it is possible to maintain a much lower overall loading level of abrasion resistant particles when a mixture of diamond particles and additional abrasion resistant particle (e.g., aluminum oxide particles) are used in accordance with the present disclosure as compared to the amount needed to achieve similar results for coating layers comprising only abrasion resistant particles of aluminum oxide.

In some embodiments, the curable coating may comprise an amount of abrasion resistant particle (diamond plus an additional abrasion particle) ranging from 6 wt. % to 25 wt. % based on the total weight of the curable coating. In some embodiments, the coating layer of the present invention may comprise an amount of abrasion resistant particle ranging from 6 wt. % to 12 wt. % based on the total weight of the curable coating.

According to some embodiments, the additional abrasion resistant particle is aluminum oxide. The aluminum oxide particles may have a variety of particle sizes. In an embodiment, the aluminum oxide particles have an average particle size that is selected from the range of 2 µm to 30 µm, preferably in combination with diamond particles having an average particle size that of 6 µm 25 µm.

In some embodiments, a mixture of aluminum oxide powder¹ may be selected that has particle sizes at 50% size distribution:

| Sample | Size (µm) at 50 % |
|---|---|
| 1 | 1.77 - 2.25 |
| 2 | 2.09-2.77 |
| 3 | 2.97 - 3.85 |
| 4 | 3.72 - 4.74 |
| 5 | 5.6 - 6.75 |
| 6 | 7.05 - 8.5 |
| 7 | 9.06 - 11.13 |
| 8 | 12.4 - 14.66 |
| 9 | 16.92 - 20.6 |
| 10 | 23.6 - 27.45 |

| | |
|---|---|
| ¹Commercially available Microgrit WCA aluminum oxide powder | |

In some embodiments, a mixture of aluminum oxide powder² may be selected that has particle sizes at 50% size distribution:

| Sample | Size (µm) at 50 % |
|---|---|
| 11 | 3.1 ± 0.3 |
| 12 | 4.7 ± 0.4 |
| 13 | 6.4 ± 0.5 |
| 14 | 8.2 ± 0.6 |
| 15 | 10.2 ± 0.8 |
| 16 | 14.2 ± 1.1 |
| 17 | 17.4 ± 1.3 |
| 18 | 20.8 ± 1.5 |
| 19 | 25.5 ± 1.7 |
| 20 | 29.7 ± 20 |

| | |
|---|---|
| ²Commercially available Fujimi PWA aluminum oxide powder | |

In some embodiments, the additional abrasion resistant particle is feldspar particles. The feldspar particle may be present relative to the diamond particle in a weight ratio ranging from 2: 1 to 5:1, and preferably 4: 1. In an embodiment, the feldspar particles may have an average particle size that is selected from the range of 2 µm to 30 µm - including all integers therebetween. It has been found that coating layers comprising a mixture of diamond particles and feldspar particles may exhibit similar abrasion resistance at much lower overall loading levels of abrasion resistant particles compared to coating layers comprising abrasion resistant particles of only feldspar.

In an embodiment, the coating comprises a matting agent. The matting agent may be any matting agent known for use in the art. Preferably, it may comprise polyamide powder, fluoropolymer, silica, and combinations thereof. In some non-limiting embodiments, the polyamide powder may have a melting point up to 142°C and a particle size ranging from 8 µm to 12 µm; preferably 10 µm. The polyamide powder may be polyamide-6,6, polyamide - 6,9; polyamide-6, 10; polyamide-6, 12; and polyamide- 12;6/12. Preferably, the polyamide powder may be polyamide-6, 12. In some embodiments, the polyamide powder may be present in amount ranging from 5 wt. % to 10 wt. % based on the total weight of the coating layer, and preferably 6 wt. % to 8 wt. %.

In an embodiment, the coating may further comprise an amine synergist. In an embodiment thereof, the amine synergist may include diethyl aminoethyle methacrylate, dimethylaminoethyl methacrylate, N-N-bis(2-hydroxyethyl)-P-toluidine, Ethyl-4-dimethylamino benzoate, 2-Ethylhexyl 4-dimethylamino benzoate, as well as commercially available amine synergist, including Sartomer CN 371, CN373, CN383, CN384 and CN386; Allnex Ebecry PI 04 and Ebecry PI 15. The amine synergist may be present in the coating in an amount ranging from 1 wt.% to 5 wt.%, preferably 3 wt.%

In an embodiment, the coating may further comprise other additives and fillers, such as abrasives, surfactant, as pigments, tackifiers, surfactants, fluoro-containing compounds, fillers such as glass or polymeric bubbles or beads (which may be expanded or unexpanded), hydrophobic or hydrophilic silica, calcium carbonate, glass or synthetic fibers, blowing agents, toughening agents, reinforcing agents, fire retardants, antioxidants, and stabilizers. The additives are added in amounts sufficient to obtain the desired end properties. Suitable surfactants include, but are not limited to, fluorinated alkyl esters, polyether modified polydimethylsiloxanes and fluorosurfactants, having the formula RfCH2CH20(CH2CH20)xH, wherein Rf=F(CF2CF2)y, x=0 to 15, and y=1 to 7. The surfactant may be present in coating in an amount ranging from 0.5 wt.% to 2 wt.%, preferably 0.8 wt.%.

In an embodiment, the coating may further comprise a fluoro-containing compound, which may also function as a matting agent. In an embodiment thereof, the fluoro-containing compound may be selected from fluoropolymer particles or powders, which are also referred to as fluoropolymer waxes, and mixtures of fluoropolymer waxes and polyolefin waxes, and mixtures thereof. Suitable fluoropolymer waxes may have an average particle size ranging from 0.5 µm to 30 µm, preferably from 1 µm to 15 µm. The fluoropolymer waxes may be selected from polytetrafluoroethylene (PTFE), florinated ethylene propylene (FEP), perfluoroalkoxy polymer resin (PFA), ethylene tetrafluoroethylene (ETFE), ethylene chloro trifluoroethylene (ECTFE), polychlorotrifluoroethylene (PCTFE), polyvinylidene fluoride (PVDF), and combinations thereof. In some embodiments, the fluoropolymer is PTFE. Suitable polyolefin waxes include polyethylene waxes and polypropylene waxes. Suitable fluoropolymer mixtures may include between 10 and 90 weight % of a fluoropolymer wax and between 10 and 90 weight % of a polyolefin wax. In some embodiments, the fluoropolymer mixture has between 20 and 30 weight % of a fluoropolymer wax and between 70 and 80 weight % of a polyolefin wax. In some embodiments, the fluoro-containing compound may be present in an amount ranging from 1 wt. % to 5 wt. % based on the total weight of the coating. In some embodiments, the fluoro-containing compound may be present in an amount ranging from 1 wt. % to 3.5 wt. % based on the total weight of the coating.

In another embodiment, the coating may further comprise hydrophobic particles for improving cleanability of the coating. The hydrophobic particles may be present in the coating in an amount ranging from 1 wt.% to 5 wt.%, preferably 3 wt.%. In an embodiment, the hydrophobic particles may be MicroPowder Fluo HT having an average particle size ranging from 2 µη 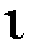 to 4 µm; MicroPowder PolyFluo 523XF having an average particle size ranging from 3.5 to 5.5um; or a combination of Fluo HT and PolyFluo 523XF.

In a certain embodiment, the coating comprises a curable resin, a cure system comprising a photo-initiator, diamond particles, a matting agent and hydrophobic particles. Preferably, the diamond particles may be nano-sized or a mixture of nano-sized and micron-sized diamond particles. In an embodiment, the curable coating comprises: 70 wt.% to 90 wt.% of the curable resin; 0.25 wt.% to 5 wt.% of the photo-initiator; 1 wt.% to 10 wt.% of the matting agent; 1 wt.% to 5 wt.% of the hydrophobic particles; and a mixture of nano-sized and micron-sized diamond particles. In a certain embodiment thereof, the curable coating comprises: 70 wt.% to 90 wt.% of the curable resin; 0.25 wt.% to 5 wt.% of the photo-initiator; 1 wt.% to 10 wt.% of the matting agent; 1 wt.% to 5 wt.% of the hydrophobic particles; 0.5 wt.% to 10 wt.% of the nano-sized diamond particles; and 0.5 wt.% to 10 wt.% of the micron-sized diamond particles. In a further embodiment thereof, the nano-sized diamond particles have an average particle size ranging from 50 nm to 900 nm, and the micron-sized diamond particles have an average particle size ranging from 2 µm to 50 µm.

A dispersing agent may optionally also be added to the coating. The dispersing agent may be selected from acrylic block-copolymers, such as commercially available BYK Disperbyk 2008, Disperbyk 2155, Disperbyk 145 and Disperbyk 185, Lubrizol Solsperse 41000 and Solsperse 71000, and may be present in the coating layer by an amount ranging from 0.1 wt. % to 1 wt. %.

### Flooring Product

An unclaimed example is a flooring product comprising a substrate and a scratch resistant layer made from a curable coating containing: i) a curable resin containing a polyester urethane acrylate and an acrylate functional monomer; ii) a cure system; and iii) diamond particles. The terms used in connection with this example have the same meanings as defined in the embodiments above.

The flooring product may optionally further comprise a print layer between the substrate and the scratch resistant layer. The flooring product may optionally further comprise a top coat layered on the top surface of the scratch resistant layer. In an example, the flooring product may comprise the print layer and the top coat.

Any print layer known for use in the art may be used with the present disclosure. Any top coat known for use in the art may be used with the present disclosure, for example, but not limited to waxes, epoxy, shellac, polyurethanes, and glosses.

The flooring product may be any product sold for use in residential or commercial flooring.

### Methods of Use

An embodiment is directed to a method of making a curable coating for a substrate. That method comprises the steps of: (a) making a resin by i) forming a hydroxy terminated polyester acrylate; ii) forming a functionalized urethane acrylate containing reactive NCO sites by reacting an isocyanate with a hydroxy terminated multifunctional acrylate; and iii) reacting the hydroxy terminated polyester acrylate with the functionalized urethane acrylate containing reactive NCO sites to make the polyester urethane acrylate; (b) adding diamond particles to the curable resin, and (c) adding a cure system to the curable resin. The terms used in connection with this embodiment have the same meanings as defined in the embodiments and examples above.

It will be understood by one of ordinary skill in the art that there are excess NCO groups present in step ii (i.e., forming a functionalized urethane acrylate containing reactive NCO sites by reacting an isocyanate with a hydroxy terminated multifunctional acrylate).

In an embodiment, the curable coating has a glass transition temperature (Tg) of 15°C to 50°C, preferably 35°C to 50°C, and more preferably 38°C to 48°C, and double bond equivalent weight (C=C eq/gram formulation) of 0.0025 to 0.0060, preferably 0.0030 to 0.0050, and more preferably 0.0035 to 0.0045.

In another embodiment, the hydroxy terminated polyester acrylate of step i is made by reacting an aromatic acid, tere-phthalic acid or aliphatic di-acid with an alkyl polyol, preferably a diol or a triol, to produce a hydroxy terminated polyester, and functionalizing the hydroxy terminated polyester by reacting the hydroxy terminated polyester with a (meth)acrylic acid containing compound (a.k.a., acrylating the hydroxy terminated polyester).

In a certain embodiment, the resulting polyester urethane acrylate has a double bond equivalent weight (c=c eq/gms coating) of 0.0010 to 0.0025, and preferably 0.0013 to 0.0015. In another embodiment, the resulting polyester urethane acrylate has a ratio of equivalents of NCO to OH groups of 0.7: 1.1 to 1.4: 1.0, preferably 0.8: 1.0 to 1.2: 1.0, and more preferably 0.9: 1.0 to 1.1 : 1.0.

In an embodiment, the curable coating may be made according to the following master batch methodology. In this certain embodiment, the coating is comprised of the curable resin, diamond particles, a dispersing agent, a photo-initiator, and flatting agent. The curable resin is first prepared then the dispersing agent may be added concurrently with the resin components or after they have been blended together. Next, the photo-initiator is slowly added at room temperature. In an alternative embodiment, the photo-initiator may be added at 45 °C with high speed agitation. High speed agitation means agitation with a blade at rotation speeds of at least 2,000 RPM. Once the photo-initiator is entirely dissolved into the master batch mixture, flatting agents and the diamond particles may be added. The matting agent and any additional abrasion resistant particles may be added to the master batch as the final ingredients to the blend. The matting agent and abrasion resistant particles should be added slowly to avoid a powder layer from forming and floating on top of the coating. Once added, the binder, dispersing agent, photo-initiator, matting agent, and abrasion resistant particles are mixed with high speed agitation for a period ranging from 5 to 15 minutes, preferably 10 minutes. During the agitations, the blade may be moved up and down to ensure proper mixing of the ingredients in the master batch. The temperature of the master batch may increase during agitation, therefore to prevent premature thermal curing of the binder, the master batch may be cooled during agitation.

The fully blended coating has a viscosity ranging from 200 to 1300 cPs at room temperature (74 °F) as measured by a Brookfield Viscometer using spindle #6 at 100 RPM. In some embodiments, the viscosity allows the blend of coating and diamond particles to be applied to a substrate by roll coating at room temperature. After applying the coating to the substrate, the blend may be exposed to UV radiation in air or a nitrogen environment.

Another unclaimed example is directed to a method of making a coated substrate comprising the steps of: applying a first layer of a curable coating to the substrate; and curing the first layer, optionally with a UV light, to make the coated substrate. The curable coating for use in this example of the disclosure is the same as that described above. Likewise, the terms used in connection with this example have the same meanings as defined in the embodiments above. The first layer of the curable coating is applied to a substrate by any suitable coating method known in the art, including roll coating.

The curable coating can be partially cured to prevent the abrasion resistant particles from fully settling within the coating, or fully cured, by UV light. The UV light emits UV radiation, including that from UVA, UVB, UVC, and UVV sources. Non-limiting examples of UV partial cure radiation include UVA radiation of 0.189 J/cm²;UVB radiation of 0.163 J/cm²; UVC radiation of 0.01 J/cm²; and UVV radiation may be 0.092 J/cm². The pre-cure temperature may be 30°C - 40°C and the coating composition may be exposed to the UV radiation at a line speed ranging from 25 to 75 FPM. Non-limiting examples of UV full cure include UVA radiation of 1.006 J/cm²; UVB radiation of 0.886 J/cm²; UVC radiation of 0.126 J/cm²; and UVV radiation may be 0.504 J/cm². To fully cure, the coating composition may be exposed to the UV radiation at a line speed ranging from 25 to 75 FPM. The delay between the pre-cure / partial cure and the full cure ranges from 3 seconds to 10 seconds. The fully cured coating forms the wear layer on the coated substrate.

The term partial curing as used herein refers to curing a coated layer to a nonfluid state (i.e., semi-solid or solid) that may be tacky to the touch.

In some embodiments, the coating disclosed herein may be applied as a single wear layer on a substrate. In other embodiments, the substrate may be coated with two, three or more layers of the curable coating (i.e., a multilayer floor coating), each additional layer positioned on top of the previously applied layer. According to this embodiment, each layer may each be partially or fully cured before application of a subsequent layer of the coating to prevent the diamond particles of each layer of coating from fully settling.

Thus, another unclaimed example is directed to a method of making a multilayer coated substrate. The multilayer floor coating may be formed by applying a first layer of a curable coating on a substrate by any suitable coating method, including roll coating. The first layer may then be partially or fully cured with, for example, UV light, thus forming a base coat. In other examples, the base coat may be a pre-existing base coat. Subsequently, a second layer of the curable coating may be applied to the top surface of the first layer by, for example, roll coating, thereby forming a multilayer coated surface. The second layer may then be partially or fully cured with UV light. One or more of additional coating layers may be applied on the second layer. Once the multilayer coated surface is formed, the multilayer coated surface can be fully cured, if any of the previously applied layers is only partially cured. The curable coating for use in this example of the disclosure is the same as that described above. Likewise, the terms used in connection with this example have the same meanings as defined in the embodiments and examples above.

In an example, each fully cured layer of the curable coating has an average coating thickness that ranges from 2 µm to 50 µm, preferably 4 µm to 40 µm, and more preferably 6 µη 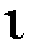 to 20 µm.

In another example, the method of making a multilayer coated substrate includes the steps of: applying a first layer of a curable coating to a substrate; curing the first layer; applying a second layer of the curable coating to the top surface of the first layer; and curing the second layer.

In an example thereof, the method of making a multilayer coated substrate includes the steps of: 1) making a curable coating, optionally by first mixing the ingredients of the resin with high speed agitation, followed by adding diamond particles and mixing with high speed agitation, wherein the diamond particles have an average particle size; 2) applying a first layer of the curable coating to a substrate by any suitable coating method, including roll coating, wherein the first layer of the coating exhibits a first average coating matrix thickness; 3) curing the first layer partially or fully with, for example, UV light; 4) applying a second layer of the curable coating to the top surface of the first layer by, for example, roll coating, thereby forming a multilayer coated surface, wherein the second layer exhibits a second average coating matrix thickness; and 5) curing the second layer partially or fully with, for example, UV light. The partial curing may take place prior to the diamond particles embedded within the coating of the layer are able to fully settle in the coating. One or more of additional coating layers may be applied on the second layer. Once the multilayer coated surface is formed, the multilayer coated surface can be fully cured, if any of the previously applied layers is only partially cured.

In an example, the curable coating has a glass transition temperature (Tg) of 15°C to 50°C, preferably 35°C to 50°C, and more preferably 38°C to 48°C, and double bond equivalent weight (C=C eq/gram formulation) of 0.0025 to 0.0060, preferably 0.0030 to 0.0050, and preferably 0.0035 to 0.0045.

In some examples, the ratio of the average coating layer thickness of the first layer and the average particle size for the diamond particles, preferably diamond particles of micron-size, may range from 0.6: 1 to 2: 1. In some examples the partial curing of the coating of the first layer results in the diamond particle being vertically offset from a bottom surface of the coating of the first layer by a first length. In some examples, the ratio of the average coating layer thickness of the second layer and the average particle size for the diamond particles, preferably diamond particles of micron-size, ranges from 0.6: 1 to 2: 1. In some examples, the partial curing of the coating of the second layer results in the diamond particle being vertically offset from a bottom surface of the coating of the second layer by a second length.

### Product by process

Yet another unclaimed example is a curable coating for a substrate comprising: a curable resin containing a polyester urethane acrylate and an acrylate functional monomer; a cure system; and diamond particles, wherein the curable resin is made by the process of: i) forming a hydroxy terminated polyester acrylate; ii) forming a functionalized urethane acrylate containing reactive NCO sites by reacting an isocyanate with a hydroxy terminated multifunctional acrylate; and iii) reacting the hydroxy terminated polyester acrylate with the functionalized urethane acrylate containing reactive NCO sites to make the polyester urethane acrylate. The terms used in connection with this example have the same meanings as defined in the embodiments and examples above

In an example thereof, the hydroxy terminated polyester acrylate of step i is made by reacting an aromatic acid, tere-phthalic acid or aliphatic di-acid with an alkyl polyol, preferably a diol or a triol, to produce a hydroxy terminated polyester, and functionalizing the hydroxy terminated polyester by reacting the hydroxy terminated polyester with a (meth)acrylic acid containing compound (a.k.a., acrylating the hydroxy terminated polyester).

In a certain example, the resulting polyester urethane acrylate has a double bond equivalent weight of 0.0010 to 0.0025, and preferably 0.0013 to 0.0015. In another embodiment, the resulting polyester urethane acrylate has a ratio of equivalents of NCO to OH groups of 0.7: 1.1 to 1.4: 1.0, preferably 0.8: 1.0 to 1.2: 1.0, and more preferably 0.9: 1.0 to 1.1: 1.0.

In another example, the curable coating has a glass transition temperature (Tg) of 15°C to 50°C, preferably 35°C to 50°C, and more preferably 38°C to 48°C, and double bond equivalent weight (C=C eq/gram formulation) of 0.0025 to 0.0060, preferably 0.0030 to 0.0050, and preferably 0.0035 to 0.0045.

Specific embodiments and examples of the disclosure will now be demonstrated by reference to the following general methods of manufacture and examples. It should be understood that these examples are disclosed solely by way of illustration and should not be taken in any way to limit the scope of the present disclosure.

### EXAMPLES

The following examples are prophetic and demonstrate the superior results that the inventors anticipate when using coatings of the present disclosure.

### Example 1

Prophetic Example 1 shows the prophetic results of a Gardner gloss retention test for Example Al, a coating of the present disclosure that contains a mixture of micron-sized and nano-sized diamond particles, Example A2, a coating of the present disclosure that contains nano-sized diamond particles, and Comparative Example A, a coating that does not contain diamond particles.

For the Gardner gloss retention test, each coating layer is abraded with 30 passes using 100 grit sand paper and applying 2. libs weight. A Gardner abrasion tester is used, which is available from BYK Gardner. Note that modifications to this procedure include less weight and less aggressive sandpaper to allow for differentiation between samples. After abrading, each sample is visually compared by a panel of test evaluators for retention of desired visual appearance - wherein the rank of visual appearance is calculated on a scale of 0 to 1. A value of 0 being the best having minimal abrasion, and a value of 1 being the worst having visually significant and noticeable abrasions. The percent gloss retained is calculated based on initial gloss and final gloss after the test.

**Table 1 : Coating compositions with and without diamond particles**

| **Compositions** | | | **Example A1** | **Example A2** | **Comparativ e Example A** |
|---|---|---|---|---|---|
| Trade Name | Supplier | Amt (g) | Amt (g) | Amt (g) | Amt (g) |
| AFI multifunctional polyurethane acrylate* | AFI NPD | Curable resin | 34 | 34 | 34 |
| SR833S | Sartomer | Acrylate monomer | 1.3.62 | 13.62 | 13.62 |
| SR 351 | Sartomer | Acrylate monomer | 4.77 | 4.77 | 4.77 |
| SR506A | Sartomer | Acrylate monomer | 6.81 | 6.81 | 6.81 |
| Ebecry 114 | Allnex | Acrylate monomer | 6.13 | 6.13 | 6.13 |
| SR 238 | Sartomer | Acrylate monomer | 6.13 | 6.13 | 6.13 |
| Scls UV | BlueStar Silicones | Silicon acrylate | 2.72 | 2.72 | 2.72 |
| RCA170 | | | | | |
| CN371 | Sartomer | Amine co-initiator | 3.09 | 3.09 | 3.09 |
| Disperbyk 2008 | BYK | Dispersing agent/ surfactant | 0.39 | 0.39 | 0.39 |
| Speedcure BP | Lambson | Photoinitiator | 3.22 | 3.22 | 3.22 |
| Speedcure 84 | Lambson | Photoinitiator | 0.8 1 | 0.81 | 0.81 |
| Orgasol 3501 EX DNAT1 | Arkema | Texturizing agent/ nylon | 7.07 | 7.07 | 7.07 |
| Fluo HT** | MicroPowder | Polytetrafluoroethylen e copolymer | 2.29 | 2.29 | 2.29 |
| Acematt 3600 | Degussa | Matting agent | 5.21 | 5.21 | 5.21 |
| SCMD B6 | Henan Yuxin g | Micron-sized diamond particles (6-10 microns) | 3.71 | | |
| Submicron diamond dust/dispersed 50% | 50nm particles Tech Metals | Nano-sized diamond particles | 3.0 | 5.0 | |
| **PROPHETIC RESULTS** | Gardner gloss retention modified | | 95 | 70 | 40 |

| | | | | | |
|---|---|---|---|---|---|
| * The AFI multifunctional polyurethane acrylate is a curable resin as disclosed herein, or, for example, in U.S. Patent No. 5,719,227. In particular, it may be Polyol 1 and Desmodur N3300, as used in Example 1 of U.S. Patent No. 5,719,227. Alternatively, the AFI multifunctional polyurethane acrylate may be made up of 17.02 g of EC6360, a polyester acrylate from Eternal, and 17.02 g of EB8602, a multifunctional urethane acrylate from Allnex. EC6360 and EB8602 react to make a multifunctional polyurethane acrylate. **Fluo HT adds hydrophobicity on the surface for improved cleanability. | | | | | |

As shown in the table above, inventors expect that the coating of the present disclosure will exhibit superior gloss retention than a coating of similar makeup but that does not contain diamond particles.

### Example 2

Unclaimed example 2 shows the prophetic results of a Gardner gloss retention test for Examples B and C, wood topcoats of the present disclosure that contains a mixture of micron-sized and nano-sized diamond particles, as compared to Comparative Examples B and C, wood topcoats that do not contain diamond particles.

**Table 2: Coating (wood topcoats) compositions with and without diamond particles**

| **Compositions** | | **Example B** | **Comparative Example B** | **Example C** | **Comparative Example C** |
|---|---|---|---|---|---|
| Trade Name | Function | Amt (g) | Amt (g) | Amt (g) | Amt (g) |
| PPG R1158 topcoat^{¥} | | 89 | 100 | | |
| PPG R2125 nano topcoat^{¥£} | | | | 89 | 100 |
| SCMD B6 | Micron-sized diamond particles (6-10 microns) | 5 | | 5 | |
| Submicron Diamond 50nm/dispersed 50% | Nano-sized diamond particles | 3 | | 3 | |
| Fluo HT | Polytetrafluoroethylene copolymer | 3 | | 3 | |
| **PROPHETIC RESULTS** | Gardner gloss retention modified | 95 | 30 | 95 | 50 |

| | | | | | |
|---|---|---|---|---|---|
| ^{¥}A commercially available urethane acrylate made by reacting a polyol and isocyanate to form a polyurethane. In addition, it contains acrylate monomers, at least one matting agent, at least one surfactant, and other additives. ^{¥£}A commercially available urethane acrylate made by reacting a polyol and isocyanate to form a polyurethane, that also includes nano-sized aluminum oxide particles. In addition, it contains acrylate monomers, at least one matting agent, at least one surfactant, and other additives. | | | | | |

As shown in the table above, inventors expect that the coatings of the present disclosure will exhibit superior gloss retention than coatings of similar makeup but that do not contain diamond particles.

## Claims

1. A curable coating for a substrate comprising:
a. a curable resin comprising:
i. a polyester urethane acrylate; and
ii. an acrylate functional monomer;
b. a cure system; and
c. diamond particles,
**characterised in that** the coating contains a mixture of nano-sized and micron-sized diamond particles.

2. The coating of claim 1, wherein the cure system is selected from a group consisting of photo-initiators, thermal initiators, curing resins, and combinations thereof.

3. The coating of claim 2, wherein the photo-initiator is selected from a group consisting of benzophenone, 1-hydroxycyclohexyl phenyl ketone, benzoin, benzoin methyl ether, benzoin ethyl ether, benzoin isopropyl ether, benzyl diphenyl sulfide, and any combination thereof.

4. The coating of claim 2, wherein the thermal initiator is selected from a group consisting of a peroxide compound, an azo compound, and a combination thereof.

5. The coating of claims 1-4, further comprising at least one additional abrasion resistant particle, wherein optionally, the at least one additional abrasion particle has a Mohs hardness value of at least 6.

6. The coating of claim 1 to 5, further comprising a matting agent.

7. The coating of claim 1 to 6, further comprising hydrophobic particles.

8. The coating of claims 1-7, wherein the coating contains 0.5% to less than 5.5% by weight of diamond particles, and optionally the coating contains 1% to 5% by weight of diamond particles and optionally the coating contains 2% to 4.5% by weight of diamond particles.

9. The coating of claims 1-8, wherein the nano-sized diamond particles have an average particle size between 1.0 to 900 nanometers, and/or wherein the coating contains 0.1% to 10% by weight of nano-sized diamond particles.

10. The coating of claim 1-9, wherein the micron-sized diamond particles have an average particle size between 0.2 to 200 µm.

11. The coating of claim 10, wherein a ratio of the average thickness of a layer of the coating to the average particle size of the micron-sized diamond particles ranges from 0.6: 1 to 2: 1, and, wherein optionally, the ratio of the average thickness of the layer of the coating to the average particle size of the micron-sized diamond particles is from 0.8: 1 to 2: 1, and, wherein optionally, the ratio of the average thickness of the layer of the coating to the average particle size of the micron-sized diamond particles is 0.9: 1 to 1.5: 1.

12. A method of making a curable coating for a substrate comprising:
a. making a curable resin by:
i. forming a hydroxy terminated polyester acrylate by the steps of:
ii. reacting an aromatic acid, terephthalic acid or aliphatic di-acid with an alkyl polyol to produce a hydroxy terminated polyester, and
iii. functionalizing the hydroxy terminated polyester by reaction with a (meth)acrylic acid containing compound;
iv. forming a functionalized urethane acrylate containing reactive NCO sites by reacting an isocyanate with a hydroxy terminated multifunctional acrylate; and
v. forming the polyester urethane acrylate by reacting the hydroxyl-terminated polyester acrylate with the functionalized urethane acrylate containing reactive NCO sites;
b. adding diamond particles to the curable resin; and
c. adding a cure system to the mixture of curable resin and diamond particles, and wherein the coating contains a mixture of nano-sized and micron-sized diamond particles.

## Patentansprüche

1. Härtbare Beschichtung für ein Substrat, die Folgendes umfasst:
a. ein härtbares Harz, das Folgendes umfasst:
i. ein Polyester-Urethan-Acrylat; und
ii. ein Acrylat-funktionelles Monomer;
b. ein Härtungssystem; und
c. Diamantpartikel,
**dadurch gekennzeichnet, dass** die Beschichtung eine Mischung aus nanometergroßen und mikrometergroßen Diamantpartikeln enthält.

2. Beschichtung nach Anspruch 1, wobei das Härtungssystem aus einer Gruppe ausgewählt ist, die aus Photoinitiatoren, thermischen Initiatoren, härtenden Harzen und Kombinationen davon besteht.

3. Beschichtung nach Anspruch 2, wobei der Photoinitiator aus einer Gruppe ausgewählt ist, die aus Folgenden besteht: Benzophenon, 1-Hydroxycyclohexylphenylketon, Benzoin, Benzoinmethylether, Benzoinethylether, Benzoinisopropylether, Benzyldiphenylsulfid und jedweder Kombination davon.

4. Beschichtung nach Anspruch 2, wobei der thermische Initiator aus einer Gruppe ausgewählt ist, die aus einer Peroxidverbindung, einer Azoverbindung und einer Kombination davon besteht.

5. Beschichtung nach den Ansprüchen 1-4, die weiter mindestens ein zusätzliches abriebfestes Partikel umfasst, wobei optional das mindestens eine zusätzliche abriebfeste Partikel einen Mohs-Härtewert von mindestens 6 aufweist.

6. Beschichtung nach den Ansprüchen 1 bis 5, die weiter ein Mattierungsmittel umfasst.

7. Beschichtung nach den Ansprüchen 1 bis 6, die weiter hydrophobe Partikel umfasst.

8. Beschichtung nach den Ansprüchen 1-7, wobei die Beschichtung 0,5 Gewichts-% bis weniger als 5,5 Gewichts-% an Diamantpartikeln enthält und optional die Beschichtung 1 Gewichts-% bis 5 Gewichts-% an Diamantpartikeln enthält und optional die Beschichtung 2 Gewichts-% bis 4,5 Gewichts-% an Diamantpartikeln enthält.

9. Beschichtung nach den Ansprüchen 1-8, wobei die nanometergroßen Diamantpartikel eine durchschnittliche Partikelgröße zwischen 1,0 bis 900 Nanometer aufweisen und/oder wobei die Beschichtung 0,1 Gewichts-% bis 10 Gewichts-% an nanometergroßen Diamantpartikeln enthält.

10. Beschichtung nach den Ansprüchen 1-9, wobei die mikrometergroßen Diamantpartikel eine durchschnittliche Partikelgröße zwischen 0,2 bis 200 µm aufweisen.

11. Beschichtung nach Anspruch 10, wobei ein Verhältnis der durchschnittlichen Dicke einer Schicht der Beschichtung zu der durchschnittlichen Partikelgröße der mikrometergroßen Diamantpartikel im Bereich von 0,6 : 1 bis 2 : 1 liegt und wobei optional das Verhältnis der durchschnittlichen Dicke der Schicht der Beschichtung zu der durchschnittlichen Partikelgröße der mikrometergroßen Diamantpartikel von 0,8 : 1 bis 2 : 1 beträgt und wobei optional das Verhältnis der durchschnittlichen Dicke der Schicht der Beschichtung zu der durchschnittlichen Partikelgröße der mikrometergroßen Diamantpartikel 0,9 : 1 bis 1,5 : 1 beträgt.

12. Verfahren zur Herstellung einer härtbaren Beschichtung für ein Substrat, das Folgendes umfasst:
a. Herstellen eines härtbaren Harzes durch:
i. Bilden eines Hydroxy-terminierten Polyesteracrylats durch die folgenden Schritte:
ii. Reagieren einer aromatischen Säure, Terephthalsäure oder aliphatischen Disäure mit einem Alkylpolyol, um einen Hydroxy-terminierten Polyester zu erzeugen, und
iii. Funktionalisieren des Hydroxy-terminierten Polyesters durch Reaktion mit einer (Meth)acrylsäure-enthaltenden Verbindung;
iv. Bilden eines funktionalisierten Urethanacrylats, das reaktive NCO-Stellen enthält, durch Reagieren eines Isocyanats mit einem Hydroxy-terminierten, multifunktionellen Acrylat; und
v. Bilden des Polyester-Urethan-Acrylats durch Reagieren des Hydroxy-terminierten Polyesteracrylats mit dem funktionalisierten Urethanacrylat, das reaktive NCO-Stellen enthält;
b. Zugeben von Diamantpartikeln zu dem härtbaren Harz; und
c. Zugeben eines Härtungssystems zu der Mischung aus härtbarem Harz und Diamantpartikeln, und wobei die Beschichtung eine Mischung aus nanometergroßen und mikrometergroßen Diamantpartikeln enthält.

## Revendications

1. Revêtement durcissable pour un substrat, comprenant
a. une résine durcissable comprenant
i. un acrylate de polyester-uréthane ; et
ii. un monomère fonctionnel d'acrylate ;
b. un système de durcissement ; et
c. des particules de diamant,
**caractérisé en ce que** le revêtement contient un mélange de particules de diamant de taille nanométrique et de taille micrométrique.

2. Revêtement selon la revendication 1, dans lequel le système de durcissement est choisi dans le groupe constitué par les photo-initiateurs, les initiateurs thermiques, les résines de durcissement, et des combinaisons de ceux-ci.

3. Revêtement selon la revendication 2, dans lequel le photo-initiateur est choisi dans le groupe constitué par la benzophénone, la 1-hydroxycyclohexyl phénylcétone, le benjoin, l'éther méthylique de benjoin, l'éther éthylique de benjoin, l'éther isopropylique de benjoin, le sulfure de benzyle diphényle, et une combinaison quelconque de ceux-ci.

4. Revêtement selon la revendication 2, dans lequel l'initiateur thermique est choisi dans le groupe constitué par un composé de peroxyde, un composé azoïque, et une combinaison de ceux-ci.

5. Revêtement selon les revendications 1-4, comprenant en outre au moins une particule supplémentaire résistante à l'abrasion, où, éventuellement, la au moins une particule supplémentaire résistante à l'abrasion présente une valeur de dureté de Mohs d'au moins 6.

6. Revêtement selon les revendications 1 à 5, comprenant en outre un agent de matité.

7. Revêtement selon les revendications 1 à 6, comprenant en outre des particules hydrophobes.

8. Revêtement selon les revendications 1-7, dans lequel le revêtement contient de 0,5% à moins de 5,5% en poids de particules de diamant, et éventuellement le revêtement contient de 1% à 5% en poids de particules de diamant, et éventuellement le revêtement contient de 2% à 4,5% en poids de particules de diamant.

9. Revêtement selon les revendications 1-8, dans lequel les particules de diamant de taille nanométrique présentent une taille de particule moyenne allant d'entre 1,0 à 900 nanomètres, et/ou le revêtement contient de 0,1% à 10% en poids de particules de diamant de taille nanométrique.

10. Revêtement selon les revendications 1-9, dans lequel les particules de diamant de taille micrométrique présentent une taille de particule moyenne allant d'entre 0,2 à 200 µm.

11. Revêtement selon la revendication 10, dans lequel le rapport entre l'épaisseur moyenne d'une couche du revêtement et la taille de particule moyenne des particules de diamant de taille micrométrique va de 0,6 : 1 à 2 : 1, et, où éventuellement, le rapport entre l'épaisseur moyenne de la couche du revêtement et la taille de particule moyenne des particules de diamant de taille micrométrique va de 0,8 : 1 à 2 : 1, et, où éventuellement, le rapport entre l'épaisseur moyenne de la couche du revêtement et la taille de particule moyenne des particules de diamant de taille micrométrique va de 0,9 : 1 à 1,5 : 1.

12. Procédé de préparation d'un revêtement durcissable pour un substrat, comprenant
a. la préparation d'une résine durcissable par :
i. la formation d'un acrylate de polyester à terminaison hydroxy par les étapes :
ii. de réaction d'un acide aromatique, d'un acide téréphtalique ou d'un diacide aliphatique avec un alkylpolyol, afin de produire un polyester à terminaison hydroxy, et
iii. de fonctionnalisation du polyester à terminaison hydroxy par réaction avec un composé contenant de l'acide (méth)acrylique ;
iv. la formation d'un acrylate d'uréthane fonctionnalisé contenant des sites NCO réactifs, par réaction d'un isocyanate avec un acrylate multifonctionnel à terminaison hydroxy ; et
v. la formation de l'acrylate de polyester-uréthane par la réaction de l'acrylate de polyester à terminaison hydroxy avec l'acrylate d'uréthane fonctionnalisé contenant des sites NCO réactifs ;
b. l'addition de particules de diamant à la résine durcissable ; et
c. l'addition d'un système de durcissement au mélange de résine durcissable et de particules de diamant, et
dans lequel le revêtement contient un mélange de particules de diamant de taille nanométrique et de taille micrométrique.
